# EUROPÄISCHE PATENTANMELDUNG

(11) **EP 0 864 895 A1**
(43) Veröffentlichungstag der Anmeldung: **16.09.1998**
(21) Anmeldenummer: 98400431.7
(22) Anmeldetag: 20.02.1998
(51) Int. Cl.: G02B 6/44

(54) **Vorrichtung zur Aufnahme einer Vielzahl von Kassetten**

(30) Priorität: 12.03.1997 DE 29704505 U
(71) Anmelder: ALCATEL ALSTHOM COMPAGNIE GENERALE D'ELECTRICITE, 75008 Paris (FR)
(72) Erfinder: Stieb, Werner, Dipl.-Ing., 31655 Stadthagen (DE); Freckmann, Hans-Holger, 30855 Langenhagen (DE); Wielgolaski, Zbigniew, Dipl.-Ing., 31655 Stadthagen (DE); Grajewski, Franz, Dr.-Ing., 31655 Stadthagen (DE)
(74) Vertreter: Mende, Dirk

(57) **Zusammenfassung**

Bei einer Vorrichtung zur Halterung einer Vielzahl von zumindest eine Lichtwellenleitervorratslänge aufnehmenden Kassetten ist zumindest ein Halter für die Kassetten, in welcher die Kassetten in paralleler Anordnung horizontal angeordnet sind, vorgesehen. Jede Kassette (4) ist in seitlichen Führungen (5) in dem Halter (3) einzeln herausziehbar angeordnet. An dem Halter (3) ist im Abstand zu diesem eine Führungsleiste (7) mit einer Vielzahl von übereinander angeordneten Fixierungspunkten (13) für die Lichtwellenleiter (12) bzw. Adern befestigt. Der Ein- und der Ausgang (14) für die Lichtwellenleiter (12) bzw. Adern ist an der Seite der Kassette (4) angeordnet, die der Führungsleiste (7) zugekehrt ist.

## Beschreibung

Die Erfindung betrifft eine Vorrichtung zur Aufnahme einer Vielzahl von Kassetten.

Aus der DE-A-44 05 666 ist eine Universal-Anschlußeinheit für Lichtwellenleiter bekannt. Diese Anschlußeinheit besteht aus einer Haubenmuffe mit einem Muffenkopf und einer Haube. In dem Muffenkopf sind mehrere Durchführungen vorgesehen, durch welche ein Hauptkabel in das Muffeninnere hereingeführt und ein Verzweigungskabel herausgeführt werden kann. An einem am Muffenkopfbefestigten Befestigungsbügel ist eine Rückwand befestigt, an welcher eine Vielzahl von Kassetten herausschwenkbar angeordnet sind. Die Kassetten weisen eine ovale Form auf und beinhalten Einzelfaserspleiße, Bündeladerspleiße, Koppler, Adapter zum Verzweigen von Bündeladern auf Einzelfasern oder Vorratslängen der Lichtwellenleiter. Der besondere Vorteil dieser Anschlußeinheit besteht darin, daß diese mit einer unterschiedlichen Anzahl von Kassetten mit unterschiedlicher Höhe bestückt werden können. Ein weiterer Vorteil liegt in der guten Zugänglichkeit der einem Teilnehmer zugeordneten Einzelfaserspleiße, die jeweils in einer separaten Kassette abgelegt sind.

Nachteilig ist bei dieser Anordnung, daß das Hauptkabel in die Muffe hereingeführt wird, was zwangsläufig Probleme bei der Abdichtung des Eintrittsbereichs im Muffenkopf nach sich zieht. Ein weiterer Nachteil besteht darin, daß nur ovale Kassetten verwendet werden können.

Aus der älteren deutschen Patentanmeldung 197 05 648.2 der Anmelderin ist eine Muffe für Lichtwellenleiter mit einer Vielzahl von Kassetten bekannt, die jede für sich zugänglich ist und in welchen eine Vorratslänge eines Lichtwellenleiters abgelegt ist. Die Muffe ist werksseitig derart vorkonfektioniert, daß die Enden der Lichtwellenleiter an die aus einem optischen Kabel abzuzweigenden Lichtwellenleiter anschließbar sind.

Der vorliegenden Erfindung liegt die Aufgabe zugrunde, einen sogenannten Organizer für Muffen bereitzustellen, der einen gesonderten Zugriff zu den einzelnen Kassetten ermöglicht, ohne daß die anderen Kassetten beeinträchtigt werden. Darüber hinaus soll gewährleistet sein, daß die Lichtwellenleiter zu jeder Zeit so geführt sind, daß unzulässige Krümmungen der Lichtwellenleiter vermieden sind.

Diese Aufgabe wird durch die im Kennzeichen des Anspruchs 1 erfaßten Merkmale gelöst.

Die wesentlichen Vorteile der Erfindung bestehen darin, daß jede Kassette einzeln zugänglich ist, ohne daß andere Kassetten dabei beeinträchtigt werden. Durch die Führungsleiste mit den Fixierungspunkten ist gewährleistet, daß die Lichtwellenleiter bzw. Adern sowohl im eingeschobenen als auch im herausgezogenen Zustand der Kassette nicht unter den zulässigen Biegeradius gekrümmt werden. Die in den Kassetten abgelegten Vorratslängen können in einfacher Weise entnommen werden und die notwendigen Arbeiten vorgenommen werden.

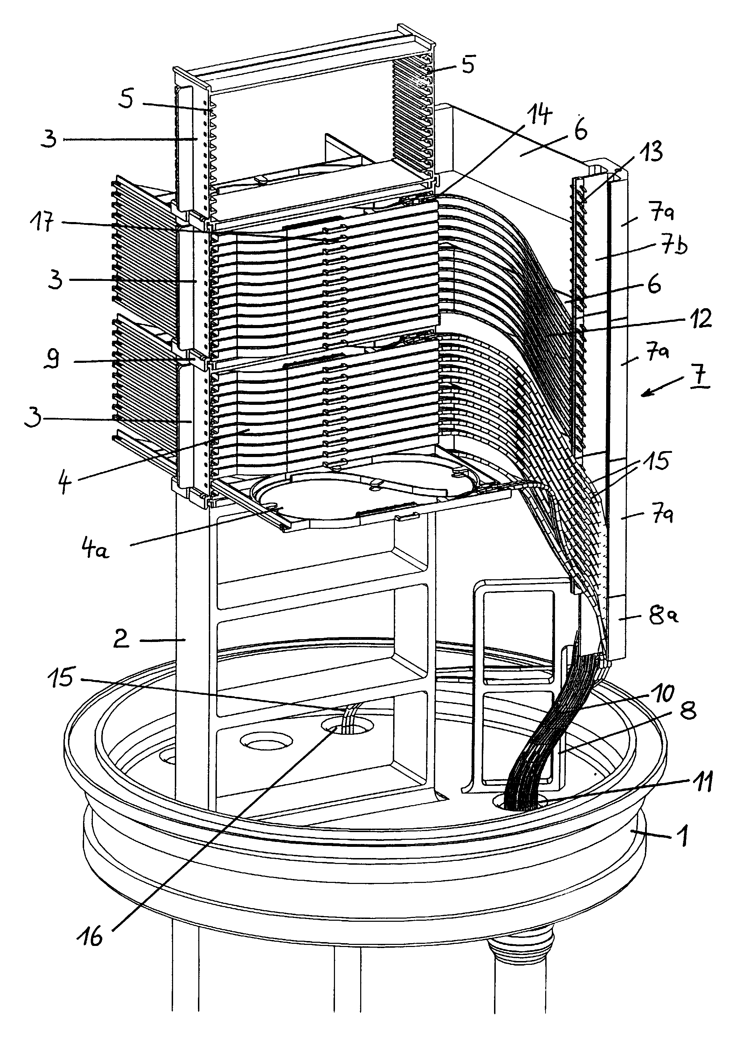

Die Erfindung ist anhand des in der Figur schematisch dargestellten Ausführungsbeispiels näher erläutert.

Auf dem Muffenkopf 1 einer Haubenmuffe ist ein erster Träger 2 angeordnet, auf welchem ein Halter 3 lösbar befestigt ist, in dem eine Vielzahl von Kassetten 4 eingeschoben sind. Hierzu weist jeder Halter 3 an beiden Seiten eine Vielzahl von Führungen 5 auf. Die Figur zeigt eine Kassette 4a im herausgezogenen Zustand. In den Kassetten 4 bzw. 4a ist eine nicht erkennbare Vorratslänge von ein oder zwei Lichtwellenleitern bzw. Adern untergebracht.

An jedem Halter 3 ist über einen Arm 6 ein Element 7a einer Führungsleiste 7 angebracht. Halter 3, Arm 6 und Element 7a bilden eine Einheit.

Die Führungsleiste 7 ist durch eine Trennwand 7b in eine vordere Führung und eine hintere Führung aufgeteilt. Die hintere Führung ist für die ankommenden Lichtwellenleiter bzw. Adern 12 und die hintere Führung für die abgehenden Lichtwellenleiter oder Adern 15 gedacht.

Neben dem ersten Träger 2 ist ein zweiter Träger 8 am Muffenkopf befestigt, der eine Basis 8a aufnimmt. Auf dieser Basis 8a ruht das unterste Element 7a. Auf den ersten Träger 2 ruht der unterste Halter 3.

Weitere Einheiten aus Halter 3, Arm 6 und Element 7a lagern auf den darunterliegenden Einheiten. Die Halter 3 sind an dem ersten Träger 2 sowie untereinander durch z. B. aufschiebbare Klemmelemente 9 bzw. durch Aufschieben lösbar verbunden.

Die Kassetten 4 sind schubladenartig aus dem Halter 3 herausziehbar. In ihrer Endstellung rasten sie in nicht dargestellter Weise in dem Halter 3 ein. Ein Lichtwellenleiterbündel bzw. ein Aderbündel 10 wird durch eine kreisrunde Öffnung 11 durch den Muffenkopf 1 hindurchgeführt. Die einzelnen Lichtwellenleiter bzw. Adern 12 werden an der Führungsleiste 7 z. B. durch Aufclipsen auf entsprechende Halterungen 13 befestigt. Im weiteren Verlauf werden die Lichtwellenleiter bzw. Adern 12 in die Kassette 4 hereingeführt, mehrere Windungen dort abgelegt und wieder herausgeführt. Ein- und Ausgang 14 für die Lichtwellenleiter bzw. Adern 12 sind an einer Seite der Kassette 4 angeordnet und zwar an der Seite, die der Führungsleiste 7 zugekehrt ist.

Der Abstand zwischen zwei Halterungen 13 ist gleich dem Rastermaß zwischen den Kassetten. Daraus resultiert, daß die Lichtwellenleiter bzw. Adern 12 parallel zueinander verlaufen, wenn die Kassetten 4 sich im eingeschobenen Zustand befinden.

Um das Herausziehen der Kassetten 4 aus dem Halter 3 zu vereinfachen, besitzt jede Kassette 4 an ihrer Frontseite einen Griff 17.

Mit 15 sind die Lichtwellenleiter bzw. Adern eines Teilnehmerkabels bezeichnet, die durch eine weitere Öffnung 16 durch den Muffenkopf 1 hindurchgeführt werden.

Das Bündel 10 besteht entweder aus Hohladern, d. h. Kunststoffröhrchen in denen ein oder zwei Lichtwellenleiter mit Überlänge untergebracht sind oder aus Festadern, d. h. Lichtwellenleiter, die über ihrem Coating eine weitere Kunststoffschicht aufweisen.

Im Falle von Hohladern sind lediglich Lichtwellenleiter in den Kassetten abgelegt. Werden Festadern verwendet, ist die Vorratslänge in den Kassetten ein Festadervorrat.

## Patentansprüche

1. Vorrichtung zur Halterung einer Vielzahl von zumindest eine Lichtwellenleitervorratslänge aufnehmenden Kassetten mit einem Halter für die Kassetten, in welcher die Kassetten in paralleler Anordnung horizontal angeordnet sind, gekennzeichnet durch folgende Merkmale:
a) jede Kassette (4) ist in seitlichen Führungen (5) in dem Halter (3) einzeln herausziehbar angeordnet,
b) an dem Halter (3) ist im Abstand zu diesem eine Führungsleiste (7) mit einer Vielzahl von übereinander angeordneten Fixierungspunkten (13) für die Lichtwellenleiter bzw. Adern (12) befestigt,
c) der Ein- und der Ausgang (14) für die Lichtwellenleiter bzw. Adern (12) ist an der Seite der Kassette (4) angeordnet, die der Führungsleiste (7) zugekehrt ist.

2. Vorrichtung nach Anspruch 1, dadurch gekennzeichnet, daß die Kassetten (4) an ihrer Frontseite einen Griff(17) aufweisen.

3. Vorrichtung nach Anspruch 1 oder 2, dadurch gekennzeichnet, daß die Kassetten (4) bis zu einer Endstellung aus dem Halter (3) herausziehbar und in der Endstellung fixierbar sind.

4. Vorrichtung nach einem der Ansprüche 1 bis 4, dadurch gekennzeichnet, daß mehrere Halter (3) modulartig übereinander stapelbar sind.

5. Vorrichtung nach Anspruch 4, dadurch gekennzeichnet, daß die Halter (3) lösbar miteinander verbunden sind.

6. Vorrichtung nach einem der Ansprüche 1 bis 5, dadurch gekennzeichnet, daß die Lichtwellenleiter bzw. Adern (12) an den Fixierungspunkten in clipartige Elemente (13) einrastbar sind.

7. Vorrichtung nach einem der Ansprüche 1 bis 6, dadurch gekennzeichnet, daß der Halter (3) bzw. Halterstapel auf einem ersten Träger (2) befestigt ist und dieser Träger (2) an dem Muffenkopf(1) einer Haubenmuffe befestigt ist.

8. Vorrichtung nach einem der Ansprüche 1 bis 7, dadurch gekennzeichnet, daß die Führungsleiste (7) aus mehreren Teilen (7a) zusammensteckbar ist.

9. Vorrichtung nach einem der Ansprüche 1 bis 8, dadurch gekennzeichnet, daß der Abstand zwischen den Fixierungspunkten (13) an der Führungsleiste (7) gleich dem Abstand zwischen den Ein- und Ausgängen (14) zweier benachbarter Kassetten (4) ist, so daß die Lichtwellenleiter bzw. Adern (12) zwischen den Fixierungspunkten (13) und dem Ein-oder Ausgang (14) der Kassetten (4) parallel zueinander verlaufen.

10. Vorrichtung nach einem der Ansprüche 1 bis 9, dadurch gekennzeichnet, daß das untere Ende der Führungsleiste (7) in etwa in der Verlängerung oberhalb der Eintrittsöffnung (11) für die Lichtwellenleiter (12) im Muffenkopf der Haubenmuffe mündet.

11. Vorrichtung nach einem der Ansprüche 1 bis 10, dadurch gekennzeichnet, daß jeder Halter (3) mit einem Teil (7a) der Führungsleiste (7) eine Einheit bildet.
